# EUROPÄISCHE PATENTANMELDUNG

(11) **EP 4 187 034 A1**
(43) Veröffentlichungstag der Anmeldung: **31.05.2023**
(21) Anmeldenummer: 21211270.0
(22) Anmeldetag: 30.11.2021
(51) Int. Cl.: E04B 1/76, F16B 15/06

(54) **VERFAHREN UND VORRICHTUNG ZUM BEFESTIGEN EINES BAUTEILS AN EINEM UNTERGRUND**

(71) Anmelder: Hilti Aktiengesellschaft, 9494 Schaan (LI)
(72) Erfinder: Gueltekin, Furkan, 9470 Buchs SG (CH); Barrafon Gomez, Marc, 8003 Zürich (CH); Domani, Guenter, 88138 Weissensberg (DE)
(74) Vertreter: Hilti Aktiengesellschaft Corporate Intellectual Property

(57) **Zusammenfassung**

Bei einem Verfahren zum Befestigen eines Bauteils wird ein Nagel mit einem Nagelschaft und einem Nagelkopf zur Verfügung gestellt, eine Hülse an dem Nagelschaft angeordnet, ein Eintreibelement und ein Führungskanal zur Verfügung gestellt, der Nagelkopf und die Hülse in dem Führungskanal angeordnet, so dass sich zwischen dem Nagelkopf und dem Führungskanal ein umlaufender Spalt ausbildet, das Eintreibelement durch den Führungskanal auf den Nagelkopf zu angetrieben, um den Nagel in einer Eintreibrichtung auf den Untergrund zu zu bewegen, die Hülse zwischen dem Nagelschaft, dem Führungskanal und dem Nagelkopf zusammengedrückt, während sich der Nagel auf den Untergrund zu bewegt, und mittels des Nagelkopfes eine Vorspannung auf die Hülse aufgebracht.

## Beschreibung

Die vorliegende Erfindung betrifft ein Verfahren und eine Vorrichtung zum Befestigen eines schichtförmigen Bauteiles an einem Untergrund.

Im Bauwesen ist es erforderlich, an Wänden oder Decken von Gebäuden als einem Untergrund einen Dämmstoff als ein insbesondere schichtförmiges Bauteil zu befestigen. Der Dämmstoff dient im Allgemeinen als Wärmedämmung für die Wand oder Decke des Gebäudes und wird außenseitig auf der Wand oder Decke befestigt. Hierzu werden Befestigungselemente mit Setzelementen, beispielsweise Nägeln, an der Wand oder Decke befestigt. Die Befestigungselemente aus Kunststoff umfassen einen Hohlschaft und einen Teller, welcher nach dem Befestigen auf einer Außenseite des Dämmstoffs aufliegt, wobei der Schaft innerhalb eines Durchgangslochs an dem Dämmstoff angeordnet ist. Der Hohlschaft umfasst einen Schaftboden mit einem Durchgang für das Setzelement, so dass das Befestigungselement mittels des Setzelementes mittelbar an dem Setzgegenstand befestigbar ist.

Um das Setzelement in den Untergrund einzutreiben, wird ein Setzgerät mit einem in einem Führungskanal geführten Eintreibelement und einem Antrieb für das Eintreibelement verwendet. Ein Energiebetrag, mit welchem das Eintreibelement von dem Antrieb beaufschlagt wird, ist üblicherweise auf das Setzelement, das Befestigungselement und den Untergrund abgestimmt, wobei Überenergie zumindest zum Teil in dem Befestigungselement und/oder in dem Setzgerät abgebaut wird und das Befestigungselement beziehungsweise das Setzgerät mechanisch belastet und unter Umständen beschädigt.

Die Aufgabe der vorliegenden Erfindung besteht darin, ein Befestigungsverfahren und eine Befestigungsvorrichtung zur Verfügung zu stellen, bei denen eine Dichtheit zwischen einem Setzelement oder Nagel und einem Befestigungselement verbessert ist.

Die Aufgabe ist gelöst bei einem Verfahren zum Befestigen eines Bauteils an einem Untergrund, bei dem ein Nagel mit einem Nagelschaft und einem Nagelkopf zur Verfügung gestellt wird, wobei der Nagelkopf einen Kopfdurchmesser aufweist, welcher den Nagelschaft überragt, eine Hülse an dem Nagelschaft angeordnet wird, ein Eintreibelement und ein Führungskanal zur Verfügung gestellt werden, wobei der Führungskanal einen Innendurchmesser aufweist, welcher den Kopfdurchmesser übersteigt, der Nagelkopf und die Hülse in dem Führungskanal angeordnet werden, so dass sich zwischen dem Nagelkopf und dem Führungskanal ein umlaufender Spalt ausbildet, das Eintreibelement durch den Führungskanal auf den Nagelkopf zu angetrieben wird, um den Nagel in einer Eintreibrichtung auf den Untergrund zu zu bewegen, die Hülse zwischen dem Nagelschaft, dem Führungskanal und dem Nagelkopf zusammengedrückt wird, während sich der Nagel auf den Untergrund zu bewegt, und mittels des Nagelkopfes eine Vorspannung auf die Hülse aufgebracht wird. Dadurch liegt der Nagelkopf an der Hülse an, so dass eine Dichtheit zwischen dem Nagel und der Hülse verbessert ist. Bevorzugt umfasst das Bauteil einen Dämmstoff und/oder der Untergrund eine Wand oder Decke eines Gebäudes. Bevorzugt ist ein Durchmesser des Nagelkopfes grösser als ein Aussendurchmesser der Hülse. Eine vorteilhafte Ausführungsform ist dadurch gekennzeichnet, dass sich die Hülse während des Zusammendrückens zwischen dem Nagelschaft, dem Führungskanal und dem Nagelkopf plastisch verformt.

Eine vorteilhafte Ausführungsform ist dadurch gekennzeichnet, dass die Hülse während des Zusammendrückens zwischen dem Nagelschaft, dem Führungskanal und dem Nagelkopf einen Hohlraum zwischen dem Nagelschaft, dem Führungskanal und dem Nagelkopf vollständig ausfüllt.

Eine vorteilhafte Ausführungsform ist dadurch gekennzeichnet, dass ein Befestigungselement zur Verfügung gestellt wird, aufweisend einen Teller zum Halten des Bauteils, einen von dem Teller abragenden Hohlschaft mit einem Schaftboden, wobei der Schaftboden bevorzugt einen Durchgang für den Nagelschaft aufweist, und die Hülse, wobei die Hülse von dem Schaftboden abragt, wobei der Führungskanal in den Hohlschaft eingeführt wird, bis der Führungskanal an dem Schaftboden anliegt und die Hülse in dem Führungskanal angeordnet ist.

Eine vorteilhafte Ausführungsform ist dadurch gekennzeichnet, dass ein kraftbetriebenes Setzgerät zur Verfügung gestellt wird, aufweisend den Führungskanal, das Eintreibelement und einen Antrieb für das Eintreibelement, wobei der Führungskanal das Eintreibelement in allen Positionen des Eintreibelements in der Eintreibrichtung überragt.

Ebenfalls gelöst ist die Aufgabe mit einer Vorrichtung zum Befestigen eines Bauteils an einem bevorzugt metallenen Untergrund, mit einem Nagel mit einem Nagelschaft und einem Nagelkopf, wobei der Nagelkopf einen Kopfdurchmesser aufweist, welcher den Nagelschaft überragt, und wobei der Nagelschaft ein Vorspannelement aufweist, welches dafür vorgesehen ist, eine Vorspannkraft auf den Nagelschaft aufzubringen, wenn der Nagel in den Untergrund eingetrieben ist, und mit einem Befestigungselement, aufweisend einen Teller zum Halten des Bauteils, einen von dem Teller abragenden Hohlschaft mit einem Schaftboden, wobei der Schaftboden insbesondere einen Durchgang für den Nagelschaft aufweist, und eine Hülse, welche von dem Schaftboden abragt und an dem Nagelschaft angeordnet ist.

Eine vorteilhafte Ausführungsform ist dadurch gekennzeichnet, dass das Vorspannelement einen an einem äusseren Umfang des Nagelschafts angeordneten Widerhaken, bevorzugt eine Vielzahl von Widerhaken, umfasst. Bevorzugt ist die Vielzahl von Widerhaken in Reihen angeordnet, welche durch Nuten voneinander beabstandet sind. Besonders bevorzugt sind die Nuten zu einer Längsrichtung des Nagelschafts um einen Neigungswinkel zwischen 4° und 8° geneigt sind.

Eine vorteilhafte Ausführungsform ist dadurch gekennzeichnet, dass die Hülse im Wesentlichen aus bevorzugt thermoplastischem Kunststoff besteht.

Eine vorteilhafte Ausführungsform ist dadurch gekennzeichnet, dass der Nagel, das Eintreibelement und/oder der Führungskanal im Wesentlichen aus einem Metall oder einer Legierung, bevorzugt Stahl, bestehen. Bevorzugt weist das Vorspannelement ein Material auf, welches eine grössere Materialhärte aufweist als ein Material des übrigen Nagelschaftes. Besonders bevorzugt weist das Vorspannelement eine Legierung auf, welche Zink und Nickel umfasst.

Im Nachfolgenden werden Ausführungsbeispiele der Erfindung unter Bezugnahme auf die beigefügten Zeichnungen näher beschrieben. Es zeigen:
- Fig. 1: eine Befestigungsvorrichtung in einem Längsschnitt,
- Fig. 2: einen Ausschnitt einer Befestigungsvorrichtung während eines Befestigungsverfahrens in einem Längsschnitt,
- Fig. 3: den Ausschnitt der Befestigungsvorrichtung aus Fig. 2 in einem Längsschnitt nach Beendigung des Befestigungsverfahrens,
- Fig. 4: einen Ausschnitt eines Nagels in einer Seitenansicht, und
- Fig. 5: einen Ausschnitt des Nagels aus Fig. 4 in einem Längsschnitt.

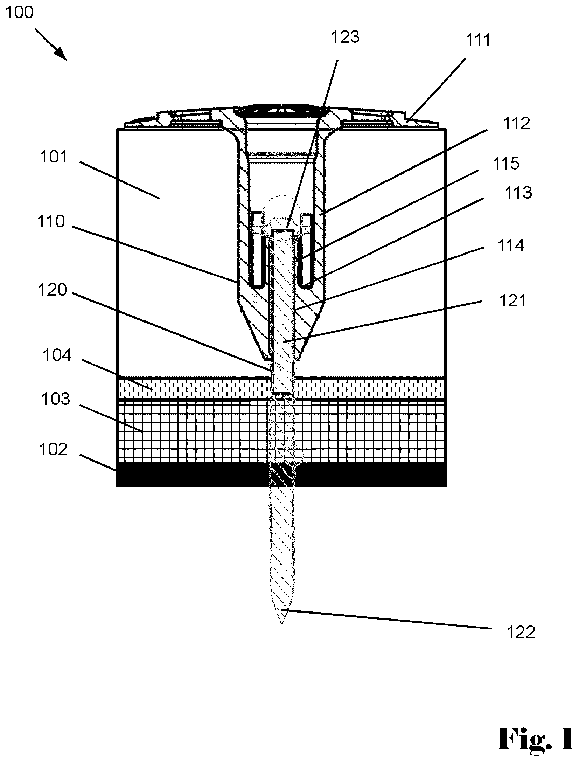

In Fig. 1 ist eine Befestigungsvorrichtung 100 zum Befestigen eines Bauteils 101 wie beispielsweise eines Dämmstoffelements an einem metallenen Untergrund 102 wie beispielsweise einem Stahlträger oder einem Rahmenelement einer Wand oder Decke eines Gebäudes in einem Längsschnitt dargestellt. Im gezeigten Ausführungsbeispiel sind zwischen dem Untergrund 102 und dem Bauteil 101 eine Verkleidung 103 und eine Abdeckfolie 104 angeordnet. Die Befestigungsvorrichtung 100 umfasst ein Befestigungselement 110 und einen Nagel 120.

Das Befestigungselement 110 weist einen Teller 111 zum Halten des Bauteils 101 gegen den Untergrund 102, einen von dem Teller 111 abragenden Hohlschaft 112 mit einem Schaftboden 113 und eine von dem Schaftboden 113 abragende Hülse 115 auf. Der Schaftboden 113 weist einen Durchgang 114 für den Nagel 120 auf. Die Hülse 115, bevorzugt das gesamte Befestigungselement 110, besteht im Wesentlichen aus einem thermoplastischen Kunststoff.

Der Nagel 120 umfasst einen Nagelschaft 121 mit einer insbesondere konusförmigen Nagelspitze 122 und einen Nagelkopf 123 mit einem Kopfdurchmesser, welcher den Nagelschaft 121 überragt. Der Nagel 120 ist in dem Durchgang 114 angeordnet, so dass die Hülse 115 an dem Nagelschaft 121 anliegt und den Nagelschaft 121 umgibt. Ein Durchmesser des Nagelkopfes 123 ist grösser als ein Aussendurchmesser der Hülse 115. Der Nagel 120 besteht im Wesentlichen aus Stahl.

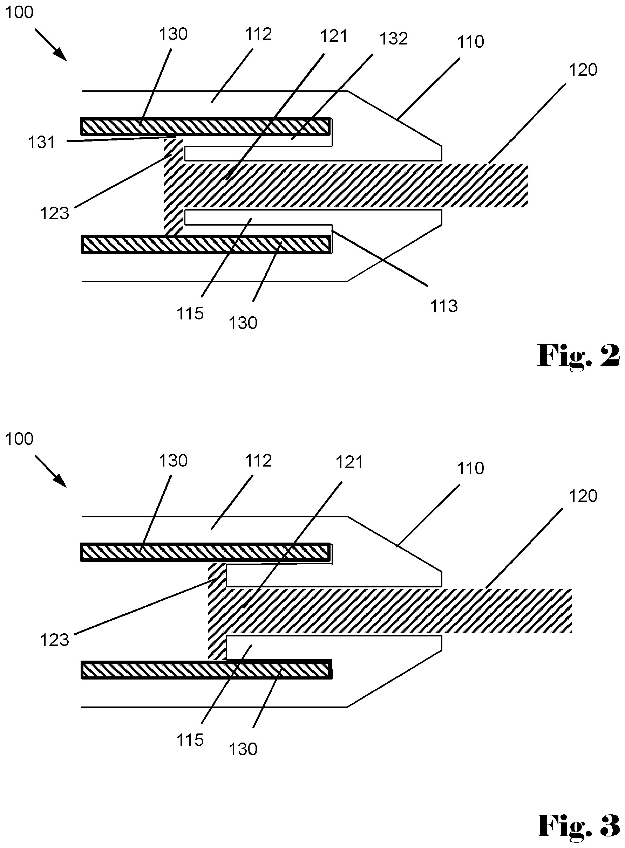

In Fig. 2 und Fig. 3 ist ein Ausschnitt der Befestigungsvorrichtung 100 während einer Befestigung an dem Untergrund dargestellt. Zur Durchführung des Befestigungsverfahrens wird zunächst ein Führungskanal 130 eines nicht weiter gezeigten kraftbetriebenen Nagelsetzgeräts in den Hohlschaft 112 des Befestigungselements 110 eingeführt, bis der Führungskanal 130 an dem Schaftboden 113 anliegt und die Hülse 115 in dem Führungskanal 130 angeordnet ist. (Fig. 2). Dabei bildet sich ein Hohlraum 132 zwischen dem Nagelschaft 121, dem Führungskanal 130 und dem Nagelkopf 123 aus, in welchem sich die Hülse 115 befindet. Ein Innendurchmesser des Führungskanals 130 übersteigt den Kopfdurchmesser, so dass der Nagel 120 in dem Führungskanal 130 geführt ist, wenn der Nagelkopf 123 und die Hülse 115 in dem Führungskanal 130 angeordnet werden. Zwischen dem Nagelkopf 123 und dem Führungskanal 130 bildet sich ein umlaufender Spalt 131 aus.

In einem nachfolgenden Schritt (Fig. 3) wird ein Eintreibelement des Nagelsetzgeräts durch den Führungskanal auf den Nagelkopf 123 zu angetrieben, um den Nagel 120 in einer Eintreibrichtung auf den Untergrund zu zu bewegen und in den Untergrund einzutreiben (in Fig. 2-3 nach rechts). Das Eintreibelement besteht dabei beispielsweise aus einem Stahlkolben mit einem Kolbendurchmesser, welcher etwas kleiner ist als der Kopfdurchmesser des Nagelkopfs 123.

Während sich der Nagel auf den Untergrund zu bewegt, wird die Hülse 115 zwischen dem Nagelschaft 121, dem Führungskanal 130 und dem Nagelkopf 123 zusammengedrückt und insbesondere plastisch verformt. Die Hülse 115 füllt dabei einen Hohlraum 132 zwischen dem Nagelschaft 121, dem Führungskanal 130 und dem Nagelkopf 123 vollständig aus. Dann wird mittels des Nagelkopfes 123 eine Vorspannung auf die Hülse 115 aufgebracht, so dass der Nagelkopf 123 fest an der Hülse 115 und die Hülse 115 fest an dem Nagelschaft 121 anliegt. Zu diesem Zweck weist der Nagel 120 ein Vorspannelement auf, wie nachfolgend noch erläutert wird. Ein Eindringen von Wasser zwischen den Nagel 120 und das Befestigungselement 110 wird dadurch erschwert.

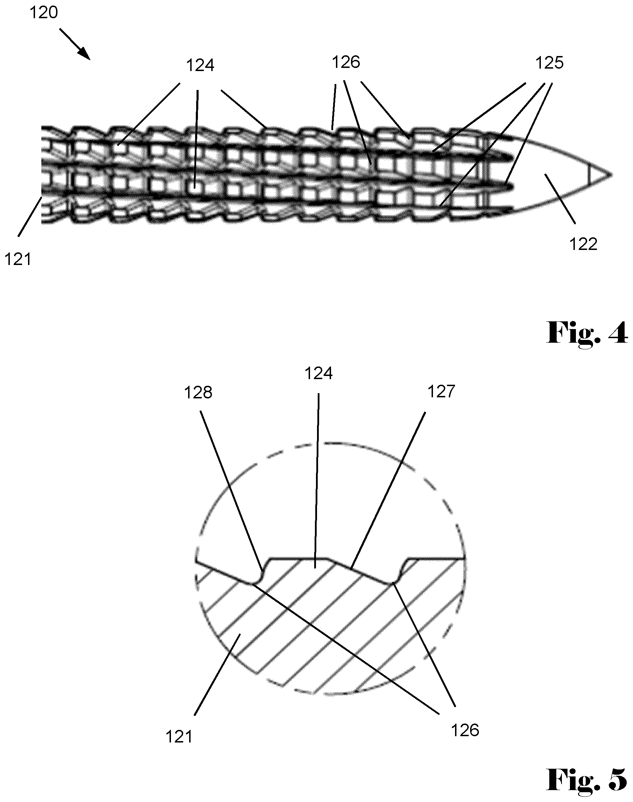

In Fig. 4 und Fig. 5 ist jeweils ein Ausschnitt des Nagels 120 dargestellt. Der Nagel 120 weist eine Vielzahl von Vorspannelementen 124 auf, welche dafür vorgesehen sind, eine Vorspannkraft auf den Nagelschaft 121 aufzubringen, wenn der Nagel 120 in den Untergrund eingetrieben ist. Zu diesem Zweck sind die Vorspannelemente 124 als Widerhaken ausgebildet, welche durch Längsnuten 125 und Quernuten 126 voneinander getrennt sind. Eine Tiefe der Längsnuten 125 und/oder der Quernuten 126 beträgt mindestens 5% eines Schaftdurchmessers des Nagelschaftes 121. Die bevorzugt mindestens vier Längsnuten 125 sind zu einer Längsrichtung des Nagelschafts 121 um einen Neigungswinkel von 6° helixförmig geneigt und erstrecken sich bis in die Nagelspitze 122 hinein. Ein Abstand zwischen jeweils zwei benachbarten Quernuten 126 ist bevorzugt kleiner oder gleich einer Dicke des Untergrunds.

Jedes Vorspannelement 124 hat eine bevorzugt konusförmige vordere Flanke 127, welche zur Nagelspitze 122 ausgerichtet ist (in Fig. 4-5 nach rechts) und eine bevorzugt konusförmige hintere Flanke 128, welche zum Nagelkopf ausgerichtet ist (in Fig. 4-5 nach links). Ein vorderer Flankenwinkel zwischen der vorderen Flanke 127 und der Längsrichtung des Nagelschafts 121 ist kleiner (beispielsweise zwischen 10° und 30°) als ein hinterer Flankenwinkel zwischen der hinteren Flanke 128 und der Längsrichtung des Nagelschafts 121 (beispielsweise zwischen 60° und 90°, bevorzugt zwischen 80° und 90°).

Die Vorspannelemente 124 weisen zumindest an ihrer Oberfläche ein Material mit einer grossen Materialhärte auf, die bevorzugt grösser ist als eine Materialhärte des übrigen Nagelschaftes 121 und/oder des Untergrunds. Zu diesem Zweck weisen die Vorspannelemente 124 eine Legierung auf, welche Zink und Nickel umfasst, bevorzugt in Gestalt einer Beschichtung des Nagelschafts 121.

Beim Eintreiben des Nagels 120 in den Untergrund wird ein Material des Untergrunds derart in die Längsnuten 125 und die Quernuten 126 hinein verformt, dass es an der vorderen Flanke 127 und der hinteren Flanke 128 der Vorspannelemente 124 anliegt. Da diese Verformung des Untergrundmaterials teilweise elastisch ist, übt der Untergrund Kräfte auf die Vorspannelemente 124 aus, welche aufgrund der unterschiedlichen Flankenwinkel für die vordere Flanke 127 und die hintere Flanke 128 verschieden sind. Je steiler eine Flanke ist, desto grösser ist die Kraftkomponente in Längsrichtung des Nagelschafts 121. Daraus resultiert eine Vorspannkraft entlang der Längsrichtung des Nagelschafts 121 auf die Nagelspitze 122 zu, welche von dem Untergrund auf den Nagel 120 ausgeübt wird. Der Nagel 120 überträgt diese Vorspannkraft mittels des Nagelkopfes 123 auf die Hülse 115 (Fig. 1), so dass auch bei einem thermoplastischen Hülsenmaterial eine verbesserte Dichtwirkung der Hülse 115 erzielbar ist.

Die Erfindung wurde am Beispiel eines Verfahrens und einer Vorrichtung zur Befestigung insbesondere eines Dämmstoffs an einer Wand oder Decke eines Gebäudes beschrieben. Es wird jedoch darauf hingewiesen, dass die Erfindung auch für andere Zwecke geeignet ist.

## Patentansprüche

1. Verfahren zum Befestigen eines Bauteils, insbesondere eines Dämmstoffs, an einem Untergrund, insbesondere an einer Wand oder Decke eines Gebäudes, das Verfahren umfassend:
- Zur-Verfügung-Stellen eines Nagels mit einem Nagelschaft und einem Nagelkopf, wobei der Nagelkopf einen Kopfdurchmesser aufweist, welcher den Nagelschaft überragt,
- Anordnen einer Hülse an dem Nagelschaft,
- Zur-Verfügung-Stellen eines Eintreibelements und eines Führungskanals, wobei der Führungskanal einen Innendurchmesser aufweist, welcher den Kopfdurchmesser übersteigt,
- Anordnen des Nagelkopfes und der Hülse in dem Führungskanal, so dass sich zwischen dem Nagelkopf und dem Führungskanal ein umlaufender Spalt ausbildet,
- Antreiben des Eintreibelements durch den Führungskanal auf den Nagelkopf zu, um den Nagel in einer Eintreibrichtung auf den Untergrund zu zu bewegen,
- Zusammendrücken der Hülse zwischen dem Nagelschaft, dem Führungskanal und dem Nagelkopf, während sich der Nagel auf den Untergrund zu bewegt, und
- Aufbringen einer Vorspannung auf die Hülse mittels des Nagelkopfes.

2. Verfahren nach einem der vorhergehenden Ansprüche, wobei ein Durchmesser des Nagelkopfes grösser ist als ein Aussendurchmesser der Hülse.

3. Verfahren nach einem der vorhergehenden Ansprüche, wobei sich die Hülse während des Zusammendrückens zwischen dem Nagelschaft, dem Führungskanal und dem Nagelkopf plastisch verformt.

4. Verfahren nach einem der vorhergehenden Ansprüche, wobei die Hülse während des Zusammendrückens zwischen dem Nagelschaft, dem Führungskanal und dem Nagelkopf einen Hohlraum zwischen dem Nagelschaft, dem Führungskanal und dem Nagelkopf vollständig ausfüllt.

5. Verfahren nach einem der vorhergehenden Ansprüche, weiterhin umfassend:
- Zur-Verfügung-Stellen eines Befestigungselements, aufweisend einen Teller zum Halten des Bauteils, einen von dem Teller abragenden Hohlschaft mit einem Schaftboden, wobei der Schaftboden insbesondere einen Durchgang für den Nagelschaft aufweist, und die Hülse, wobei die Hülse von dem Schaftboden abragt,
- Einführen des Führungskanals in den Hohlschaft, bis der Führungskanal an dem Schaftboden anliegt und die Hülse in dem Führungskanal angeordnet ist.

6. Verfahren nach einem der vorhergehenden Ansprüche, weiterhin umfassend:
- Zur-Verfügung-Stellen eines kraftbetriebenen Setzgeräts, aufweisend den Führungskanal, das Eintreibelement und einen Antrieb für das Eintreibelement, wobei der Führungskanal das Eintreibelement in allen Positionen des Eintreibelements in der Eintreibrichtung überragt.

7. Vorrichtung zum Befestigen eines Bauteils, insbesondere eines Dämmstoffs, an einem insbesondere metallenen Untergrund, insbesondere an einer Wand oder Decke eines Gebäudes, die Vorrichtung umfassend:
- einen Nagel mit einem Nagelschaft und einem Nagelkopf, wobei der Nagelkopf einen Kopfdurchmesser aufweist, welcher den Nagelschaft überragt, und wobei der Nagelschaft ein Vorspannelement aufweist, welches dafür vorgesehen ist, eine Vorspannkraft auf den Nagelschaft aufzubringen, wenn der Nagel in den Untergrund eingetrieben ist
- ein Befestigungselement, aufweisend einen Teller zum Halten des Bauteils, einen von dem Teller abragenden Hohlschaft mit einem Schaftboden, wobei der Schaftboden insbesondere einen Durchgang für den Nagelschaft aufweist, und eine Hülse, welche von dem Schaftboden abragt und an dem Nagelschaft angeordnet ist.

8. Vorrichtung nach Anspruch 7, wobei das Vorspannelement einen an einem äusseren Umfang des Nagelschafts angeordneten Widerhaken umfasst.

9. Vorrichtung nach Anspruch 8, wobei das Vorspannelement eine Vielzahl von an dem äusseren Umfang des Nagelschafts angeordneten Widerhaken umfasst.

10. Vorrichtung nach Anspruch 9, wobei die Vielzahl von Widerhaken in Reihen angeordnet sind, welche durch Nuten voneinander beabstandet sind.

11. Vorrichtung nach Anspruch 10, wobei die Nuten zu einer Längsrichtung des Nagelschafts um einen Neigungswinkel zwischen 4° und 8° geneigt sind.

12. Vorrichtung nach einem der Ansprüche 7 bis 11, wobei die Hülse im Wesentlichen aus insbesondere thermoplastischem Kunststoff besteht.

13. Vorrichtung nach einem der Ansprüche 7 bis 12, wobei der Nagel, das Eintreibelement und/oder der Führungskanal im Wesentlichen aus einem Metall oder einer Legierung, insbesondere Stahl, bestehen.

14. Vorrichtung nach Anspruch 13, wobei das Vorspannelement ein Material aufweist, welches eine grössere Materialhärte aufweist als ein Material des übrigen Nagelschaftes.

15. Vorrichtung nach Anspruch 14, wobei das Vorspannelement eine Legierung aufweist, welche Zink und Nickel aufweist.
